# EUROPEAN PATENT APPLICATION

(11) **EP 2 471 828 A1**
(43) Date of publication of application: **04.07.2012**
(21) Application number: 11150139.1
(22) Date of filing: 04.01.2011
(51) Int. Cl.: C08G 18/10, C09J 175/04, C08K 3/00, C08K 3/22, C08K 3/34

(54) **Glue Composition for Circuit Board**

(71) Applicant: Pin Year Co., Ltd., Taipei County (TW)
(72) Inventor: Chang, Chih-Ming, Taipei County (TW)
(74) Representative: Lang, Christian

(57) **Abstract**

A glue composition for use in printed circuit board to secure, insulate and protect electronic components thereon is disclosed. The glue composition includes between about 60 and about 75 weight percent MDI-based polyisocyanate prepolymer, between about 9 and about 25 weight percent flame retardant without phosphorus and halogen, between about 15 and about 22 weight percent insulator and between about 1 and about 3 weight percent surfactant.

## Description

### Background of the Invention

### 1. Technical Field

The invention relates to glue, particularly to insulated glue for use in printed circuit boards.

### 2. Related Art

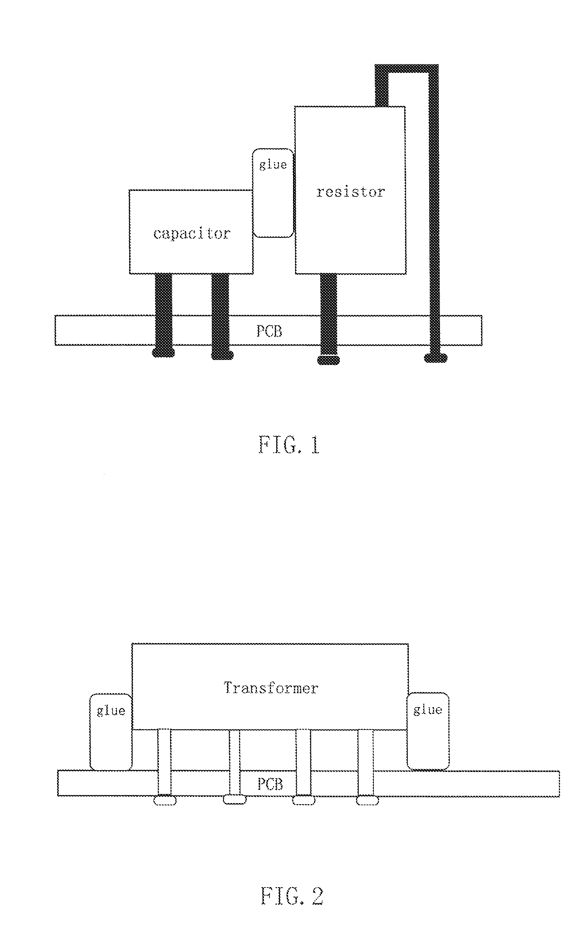

Generally speaking, a printed circuit board is completed by soldering electronic components thereon. However, if no any other additional glue is applied on the components, those components tend to be broken, short-circuited or casted due to percussion or vibration. Thus, applying glue to protect electronic components on a circuit board is necessary for precision or portable devices. For the sake of protection, the glue should be applied between two components or between a component and a circuit board as shown in FIGs 1 and 2.

This kind of glue for circuit boards should possess some properties as below:
1. Low flammability (meets UL94V-0 standard);
2. High adhesion for various materials;
3. Flexibility;
4. High insulativity; and
5. Heat resistance (no carbonization occurs in an environment of 80°C)
Currently, there are three categories of glue which are usually employed, i.e.
solvent, hot melt adhesive and silicone. The solvent type of glue may be further categorized into chloroprene rubber and polyester resin. Chloroprene rubber has advantages of high adhesion and low cost but also has disadvantages of harmfulness, bad heat resistance, easy carbonization and corrosiveness. Polyester resin has a greater anti-carbonization ability than chloroprene rubber, but it also has harmfulness and corrosiveness as chloroprene rubber. Additionally, polyester resin has poor adhesion and flexibility.

Hot melt adhesive coagulates fast, does not shrink after coagulation and can be operated by cheap tools (i.e. an adhesive gun). However, the adhesive strength of hot melt adhesive depends on temperature of the adhesive gun. And the coagulated hot melt adhesive lacks flexibility. On the other hand, hot melt adhesive must be operated at high temperature, so an operator who is operating hot melt adhesive is easy to be hurt.

In comparison with the abovementioned adhesives, silicone possesses better physical properties such as low contractibility, no harmfulness, great flexibility and heat resistance. But it is expensive and tends to coagulate due to humidity. Moreover, its adhesion to some materials is not good enough.

In sum, currently available glues have their respective advantages and disadvantages. In other words, they are needed to be further improved.

### Summary of the Invention

A primary objective of the invention is to provide a glue composition for a circuit board, which has cheaper cost than silicone and resin, stronger adhesion than silicone, hot melt adhesive and resin, greater flexibility than chloroprene rubber, resin and hot melt adhesive, and lower contractibility and higher insulativity than chloroprene rubber and resin.

A secondary objective of the invention is to provide a glue composition for a circuit board, which does not contain harmful solvent and does not have risk of operation at high temperature because it can be operated at room temperature.

Another objective of the invention is to provide a glue composition for a circuit board, which has lower humidity-reactivity than silicone so as to prevent undesired coagulation.

To accomplish the above objectives, the invention provides a glue composition including between about 60 and about 75 weight percent MDI-based polyisocyanate prepolymer, between about 9 and about 25 weight percent flame retardant without phosphorus and halogen, between about 15 and about 22 weight percent insulator and between about 1 and about 3 weight percent surfactant.

### Brief Description of the Drawings

FIGs 1 and 2 are two schematic views showing applications of the invention.

### Detailed Description of the Invention

The glue composition of the invention includes between about 60 and about 75 weight percent MDI-based polyisocyanate prepolymer, between about 9 and about 25 weight percent flame retardant without phosphorus and halogen, between about 15 and about 22 weight percent insulator and between about 1 and about 3 weight percent surfactant.

The glue composition will be further discussed below.

MDI-based polyisocyanate prepolymer possesses great electric impedance and high adhesion for many materials such as organic matters, inorganic matters and metals (e.g. copper and aluminum). Additionally, it also has great solvent resistance, heat resistance (up to 120°C) and freezing resistance (down to -40°C).

The flame retardant is of an environmentally friendly type without phosphorus and halogen. It does not belong to phosphate esters or halogen compounds and may preferably be antimony trioxide (Sb₂o₃). The flame retardant serves to reduce temperature and to generate non-flammable gas to isolate oxygen when burning.

The insulator, which may be mica or silicate-mineral, makes resin generate higher impedance than before.

The surfactant is used for lowering the interfacial tension between two surfaces adhered and increasing humidity to improve the adhesion between an organic matter and an inorganic matter. Preferably, the surfactant may be Di-(2-ethylhexyl)-Terephthalate or organosilicon.

The glue of the invention is obtained by indurating humidity in air and MDI-based polyisocyanate prepolymer, so it is very convenient to use. Its physical properties are given in the following Table 1.

**TABLE 1**

| | |
|---|---|
| viscosity(cps) | 25°C/60,000~100,000 |
| character | thixotropy |
| thermal denaturation temperature | above 80°C |
| temperature range | -40°C~150°C |
| thermal conductivity | >0.81 W / m.k |
| volume resistance | > 10¹⁴Ω-cm |
| water absorptivity | <0.1% |
| tensile strength | 100kg/cm² |
| adhesive strength | 50kg/cm² (for aluminum) |
| flammability | meets UL 94V-0 |
| dielectric strength | 20KV / mm |

It will be appreciated by persons skilled in the art that the above embodiment has been described by way of example only and not in any limitative sense, and that various alterations and modifications are possible without departure from the scope of the invention as defined by the appended claims.

## Claims

1. A glue composition for a circuit board, comprising:
between about 60 and about 75 weight percent MDI-based polyisocyanate prepolymer;
between about 9 and about 25 weight percent flame retardant without phosphorus and halogen;
between about 15 and about 22 weight percent insulator; and
between about 1 and about 3 weight percent surfactant.

2. The glue composition of claim 1, wherein the flame retardant does not belong to phosphate esters or halogen compounds.

3. The glue composition of claim 1, wherein the flame retardant is antimony trioxide (Sb₂o₃).

4. The glue composition of claim 1, wherein the insulator is mica.

5. The glue composition of claim 1, wherein the insulator is silicate-mineral.

6. The glue composition of claim 1, wherein the surfactant is Di-(2-ethylhexyl)-Terephthalate.

7. The glue composition of claim 1, wherein the surfactant is organosilicon.
